# EUROPÄISCHE PATENTSCHRIFT

(11) **EP 1 373 649 B1**
(45) Veröffentlichungstag und Bekanntmachung des Hinweises auf die Patenterteilung: **18.01.2006**
(21) Anmeldenummer: 02730061.5
(22) Anmeldetag: 25.03.2002
(51) Int. Cl.: E04B 1/41, F16B 13/00

(54) **VERFAHREN ZUR BEFESTIGUNG EINES ABSTANDSHALTERS IN EINER NICHT-TRAGFÄHIGEN VORSATZSCHALE**
METHOD FOR FASTENING A SPACER IN A NON-LOAD BEARING VENEER WALL
PROCEDE DE FIXATION D'UN ESPACEUR DESTINE A DES FACADES DE PAREMENT NON PORTEUSES

(30) Priorität: 26.03.2001 DE 10114929
(43) Veröffentlichungstag der Anmeldung: 02.01.2004
(73) Patentinhaber: Likosar, Ferdinand, 6719 Bludesch (AT); Likosar, Juliane Magdalena, 6719 Bludesch (AT)
(72) Erfinder: LIKOSAR, Ferdinand, A-6719 Bludesch (AT)
(74) Vertreter: Riebling, Peter
(86) Internationale Anmeldenummer: PCT/EP2002/003331
(87) Internationale Veröffentlichungsnummer: WO 2002/077381

(56) Entgegenhaltungen:
- DE-A- 2 065 558
- DE-A- 2 452 398
- US-A- 4 834 601
- US-A- 5 265 998
- US-A- 5 996 297

## Beschreibung

Die Erfindung betrifft einen Abstandshalter für nicht-tragfähige Vorsatzschalen, insbesondere für Isolierputzschichten an Haus- und Fassadenwänden im Außenbereich, aber auch für andere, nicht-tragfähige Vorsatzschalen im Innenbereich, insbesondere mit Isoliermaterial hinterfütterte Rigipswände, Leichtbauwände und Holzständerwände. Des weiteren ist ein Verfahren zur Befestigung eines derartigen Abstandshalters beschrieben.

Der einfacheren Beschreibung halber wird nachfolgend die Anwendung eines Abstandshalters auf einer nicht-tragfähigen Putz- und Isolierschicht beschrieben, obwohl die Erfindung sich auf sämtliche nicht-tragfähige Vorsatzschalen bezieht.

Bei derartigen nicht-tragfähigen Vorsatzschalen ist es schwierig, mit der Massivwand, die hinter der Vorsatzschale angeordnet ist, ein Befestigungselement zu verbinden. Hierzu muss man durch die Putz- und lsolierschicht hindurch in der Massivwand entsprechende Ankerschrauben oder Dübel befestigen, um an diesen Ankerschrauben oder Dübeln wiederum entsprechende Bauelemente befestigen zu können. Dazu sind die vorher genannten Abstandshalter erforderlich, die auf die Putzschicht aufgesetzt und durch die Putz- und Isolierschicht hindurchgeschlagen werden, so dass sie mindestens mit ihrem vorderen freien Ende an der Massivwand anstehen oder sogar in diese eindringen.

Bisher ist es bekannt als Abstandshalter beispielsweise ein Dreiecksprofil oder ein Rundprofil durch die vorhandene Putz- und Isolierschicht hindurchzuschlagen und direk in die Massivwand einzutreiben.

Nachteil des bisher bekannten Befestigungsverfahrens war jedoch, dass man keine genaue Lagenbestimmung des Abstandshalters in der Massivwand hatte, weil der Abstandshalter "irgendwo" auf die Putzschicht aufgesetzt und durch diese hindurch mindestens teilweise in die Massivwand eingeschlagen wurde.

Weiterer Nachteil war, dass durch das Aufsetzen des Abstandshalters auf die Putzschicht und durch das Einschlagen des Abstandshalters in diese Putzschicht diese schwer beschädigt wurde, was zu Einrissen, Abbröckelungen und insgesamt zu einem unschönen Aussehen an der Befestigungsstelle führte.

Um dieses unschöne Aussehen zu vermeiden war es ferner bekannt, die Putzschicht an der Befestigungsstelle des Abstandshalters auf der Massivwand auszuschneiden, um so einen sauberen Bereich auf der Massivwand zu erhalten, an dem der Abstandshalter oder direkt das Bauelement angebracht werden konnte.

Nachteil dieser Befestigungsmaßnahme war jedoch, dass die Putzschicht verletzt wurde und sich damit eine Kältebrücke an der Massivwand bildete, was insgesamt die Wärmedämmung beeinträchtigte und zur Schwitzwasserbildung führen konnte.

Mit der EP 1 046 764 A1 wird ein Abstandshalter zur Befestigung von Bauelementen an einer nicht-tragfähigen Vorsatzschale vor einer Massivwand offenbart, wobei ein Abstandshalter ein Rohr aufweist, an dessen Außenumfang mehrere, verteilt angeordnete Flügelansätze angeordnet sind, die sich im Wesentlichen radial nach außen erstrecken.
Die Erfindung hat den Nachteil, dass der Abstandshalter bei der Montage auf der Putzschicht relativ große Beschädigungen verursacht und das keine exakte Lagenbestimmung möglich ist, da dieser in die Putz- bzw. Isolierschicht der Vorsatzschale eingeschlagen wird.

Mit der US 5,265,998 wird ein Verfahren zur Befestigung eines Abstandshalters in einer nicht-tragfähigen Vorsatzschale vor einer Massivwand offenbart, wobei die Vorsatzschale eine Isolierschicht und eine äußere Oberflächenschicht umfasst und durch eine Bohrung in der Vorsatzschale hindurch ein Montagedorn eingeführt wird, welcher mit seinem vorderen, freien Ende in die Bohrung in der Massivwand eingreift und mit seinem hinteren Ende aus der Vorsatzschale herausragt und wobei der Abstandshalter auf den Montagedorn aufgesetzt wird.
Diese Erfindung hat den Nachteil, dass der Abstandshalter keine Flügelansätze aufweist, welche diesen für eine exakte Fixierung in der Vorsatzschale ausbildet.

Der Erfindung liegt die Aufgabe zu Grunde, ein Verfahren zur Befestigung eines Abstandshalters in einer nicht-tragfähigen Vorsatzschale vor einer Massivwand und einen entsprechenden Abstandshalter so weiterzubilden, dass eine saubere Durchtrennung der Vorsatzschale bei der Montage des Abstandshalters gewährleistet ist und der Abstandshalter hohe Lasten für zu befestigende Bauelemente aufnehmen kann.

Zur Lösung der gestellten Aufgabe ist die Erfindung durch das Verfahren nach dem Anspruch 1 gekennzeichnet.

Erfindungsgemäß ist in einem ersten Verfahrensschritt vorgesehen, dass ein Bohrer mit einer drehfest mit diesem verbundenen Bohrkrone verwendet wird, um durch die Vorsatzschale hindurch eine Bohrung in der Massivwand anzubringen, wobei gleichzeitig die Bohrkrone einen Ausschnitt in der z.B. als Putzschicht ausgebildeten äußeren Oberflächenschicht anbringt.

In einem zweiten Verfahrensschritt wird durch die Bohrung in der Putzschicht hindurch ein Montagedorn eingeführt, der mit seinem vorderen, freien Ende in die Bohrung in der Massivwand eingreift und mit seinem hinteren Ende aus der Putzschicht herausragt.

In einem dritten Verfahrensschritt wird auf diesen Montagedorn ein Abstandshalter aufgesetzt, wobei in einem vierten Verfahrensschritt der Abstandshalter mit Hilfe eines Montagewerkzeuges in die Isolierschicht eingetrieben wird.

In einem vierten Verfahrensschritt wird der Montagedorn (13) mit Hilfe des Montagewerkzeuges (15) aus dem Abstandshalter (12) entfernt, indem das Montagewerkzeug (15) mittels eines geeigneten Werkzeugs, welches in eine Bohrung des Montagedoms (20) eingreift, wieder aus dem Abstandhalter (12) herausgezogen wird;

In einem weiteren Verfahrensschritt wird durch die axiale Öffnung im Abstandshalter eine Ankerschraube eingesetzt, die mit ihrem vorderen Befestigungskopf in die Bohrung der Massivwand eingreift.

Im letzten Verfahrensschritt wird auf die aus dem Abstandshalter herausragende Ankerschraube ein Bauelement aufgesetzt und mittels einer Mutter mit dem Gewindeansatz der Ankerschraube verbunden.

Vor dem Aufsetzen des Bauelements wird gegebenenfalls eine Distanzscheibe auf die Ankerschraube aufgesetzt.

Mit dem gegebenen Verfahren ergibt sich der wesentliche Vorteil, dass zunächst vorgesehen ist, dass ein Bohrer zum Anbringen einer entsprechenden Bohrung in der Massivwand drehfest mit einer Bohrkrone verbunden ist.

Sinn dieser Maßnahme ist, dass beim Einbringen der Bohrung durch die Putzschicht hindurch die Bohrkrone gleichzeitig einen entsprechenden Ausschnitt in der Putzschicht anbringt.

Durch die erfindungsgemäße Entfernung der Putzschicht wird somit eine spätere Beschädigung der Putzschicht in diesem Bereich vermieden, insbesondere dann, wenn später der erfindungsgemäße Abstandshalter durch die entfernte Putzschicht hindurch in die Isolierung eingetrieben wird.

Damit wird auf jeden Fall eine Beschädigung der Putzschicht vermieden, weil im Eingriffsbereich des Abstandshalters die Putzschicht entfernt ist und nur noch die darunter liegende Isolierschicht vorhanden ist, durch welche hindurch der Abstandshalter ohne Probleme eingetrieben werden kann.

Die unter der Putzschicht vorhandene Isolierung besteht in der Regel aus Glasfasermatten, aus Styropor, aus Mineralfasermatten, aus Schüttungen, aus Spanfüllungen und dgl. mehr, so dass ein Eintreiben eines entsprechend zugerichteten Abstandshalters ohne weiteres möglich ist.

Nach der Herstellung der Bohrung in der Isolierschicht und einer sich daran anschließenden Bohrung in der Massivwand wird der Bohrer mit der Bohrkrone entfernt und statt dessen in die vorbereitete Bohrung ein Montagedorn eingeführt, der mit seinem vorderen freien Ende in die Bohrung der Massivwand eingreift.

Die Länge des Montagedoms ist so gewählt, dass sein hinteres Ende über die Putzschicht heraussteht, so dass er als Führungshilfe für den auf den Montagedorn aufschiebbaren Abstandshalter dient.

Dieser Abstandshalter ist als Rohr, vorzugsweise als zylindrisches Rohr, ausgebildet, welches am Außenumfang ein oder mehrere Flügelansätze aufweist.

Selbstverständlich ist es nicht lösungsnotwendig, dass das Rohr des Abstandshalters kreiszylindrisch sein muss. Der Abstandshalter kann jegliche Profilform aufweisen. D.h., es können auch ein Ovalrohr, eine Vierkantrohr oder Mehrkantrohre verwendet werden, die entsprechende, radial auswärts gerichtete Flügelansätze aufweisen.

Dieser Abstandshalter wird nun auf das hintere Ende des Montagedorns aufgesetzt, so dass sein vorderes Ende auf der Oberseite der Isolierschicht aufsitzt.

Mit einem Montagewerkzeug wird nun der Abstandshalter durch die lsolierschicht hindurch entlang des Montagedorns in die Isolierschicht eingeschlagen, so dass bevorzugt seine vordere (in der Regel angespitzte) Stirnseite teilweise in die Massivwand eindringt.

Es wird sodann der Montagedorn entfernt, und in die frei werdende Bohrung des Abstandshalters wird nun die endgültige Anker- oder Dübelschraube eingesetzt, die mit ihrem vorderen, freien Ende in die Bohrung in die Massivwand eindringt und dort verankert wird.

Die Verankerung kann in beliebiger Weise erfolgen. Es können hierbei sämtliche Dübel- oder Verankerungstechniken verwendet werden.

Die Ankerschraube ragt in Richtung zur Außenseite durch die Isolierschicht hindurch und überragt auch die in diesem Bereich entfernte Putzschicht, so dass auf das Gewindeende dieser Ankerschraube das zu befestigende Bauelement aufgesetzt wird, um mittels einer Mutter am Gewindeansatz der Ankerschraube festgelegt zu werden.

Hierbei kann es vorgesehen sein, dass zum Dickenausgleich der Putzschicht auf das hintere Stirnende des Abstandshalters eine oder mehrere Distanzscheiben aufgelegt werden, die in ihrer Dicke einen Ausgleich zu der in diesem Bereich entfernten Putzschicht erbringen soll. Die Distanzscheiben sind bevorzugt im Baukastensystem mit einem Rastermass ausgebildet, dass sie sich gegenseitig ergänzen und zu unterschiedlichen Dicken zusammenstellbar sind.

Es soll im Wesentlichen nur ein Ausgleich der im Bereich des Abstandshalters entfernten Putzschicht erfolgen, wobei bevorzugt eine scheibenförmige Distanzscheibe verwendet wird.

Statt einer derartigen Distanzscheibe können jedoch auch andere Distanzhalter verwendet werden, wie z. B. Distanzhülsen, die gegebenenfalls auch geschlitzt sind, um größere Dicken ausgleichen zu können.

Aus Schönheitsgründen soll nämlich das zu befestigende Bauelement möglichst eben auf die Putzfläche aufgesetzt werden, ohne hierbei beim Anziehen der Befestigung den Putz zu beschädigen. Aus diesem Grund können verschieden dicke Distanzscheiben oder Distanzhülsen verwendet werden, um diese Forderung zu erfüllen.

Insgesamt ergibt sich mit dem erfindungsgemäßen Verfahren der wesentliche Vorteil, dass durch eine unbeschädigte Putzschicht hindurch ein Abstandshalter eingetrieben werden kann, der lediglich durch die Isolierung hindurchgetrieben wird, und der mit seinem vorderen freien Stirnende noch teilweise in die Massivwand eingetrieben werden kann oder auf der Vorderseite der Massivwand aufsitzt, um so eine ausreichende Montagefläche für das zu befestigende Bauelement zu erreichen.

Dieser Distanzhalter überträgt dann die Spannkräfte, die von der Ankerschraube auf das Bauelement übertragen werden auf die Massivwand.

Zu diesem Zweck ist es vorgesehen, dass der Abstandshalter in einer bevorzugten Ausführungsform im Wesentlichen aus einem inneren Rohr besteht, dessen lichte Weite geeignet ist, eine entsprechende Ankerschraube oder Dübelschraube aufzunehmen.

Am Außenumfang des Rohres sind mehrere am Umfang verteilt angeordnete Flügelansätze angeordnet, die sich bevorzugt radial auswärts erstrecken.

Selbstverständlich können diese Flügelansätze auch im Winkel zu einer Radiuslinie angeordnet sein und statt einer geraden Ausbildung können diese Flügelansätze auch gekurvt, gebogen oder geknickt sein.

In einer bevorzugten Ausgestaltung ist ferner vorgesehen, dass die der Massivwand zugewandten Stirnseiten der Flügelansätze mit Schneidekanten ausgebildet sind, um ein Eintreiben dieser Flügelansätze in die Massivwand zu erleichtern.

Es kann ferner vorgesehen sein, dass die in axialer Richtung sich erstreckenden, nach außen gerichteten Kanten ebenfalls als Schneidekanten ausgebildet sind, um ein entsprechendes Durchtrennen der Isolierschicht beim Eintreiben des Abstandshalters in die Isolierschicht zu ermöglichen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Fig. 1:: schematisiert das Eintreiben eines Bohrers in eine nicht-tragfähige Vorsatzschale;
- Fig. 2:: schematisiert - in einem sich daran anschließenden Verfahrensschritt - das Anbringen eines Montagedorns mit aufgesetztem Abstandshalter;
- Fig. 3:: einen Schnitt durch den endgültig zusammengebauten Zustand;
- Fig. 4:: eine Stirnansicht auf den Abstandshalter;
- Fig. 5:: eine Stirnansicht auf den Abstandshalter mit Distanzscheibe;
- Fig. 6:: eine Seitenansicht einer Distanzhülse;
- Fig. 7:: eine Stirnansicht der Distanzhülse nach Figur 6;
- Fig. 8:: einen Schnitt durch die Distanzhülse nach den Figuren 6 und 7;
- Fig. 9:: eine Draufsicht auf die Distanzhülse nach den Figuren 6 bis 8.
- Fig. 10:: Eine Ausführung einer Distanzscheibe mit Zentrieransatz

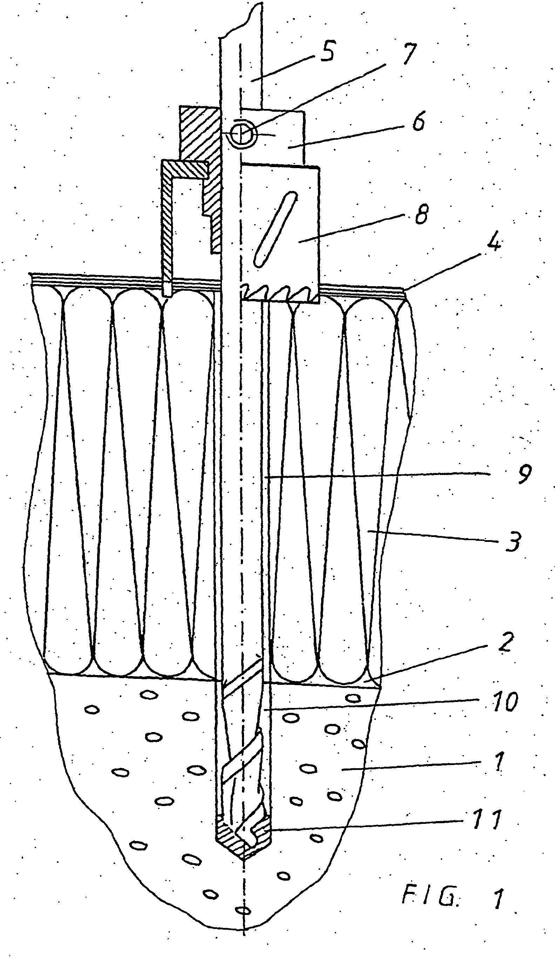

In Figur 1 ist allgemein eine Massivwand 1 dargestellt, die eine nicht-tragfähige Vorsatzschale trägt.

Als Beispiel für eine derartige nicht-tragfähige Vorsatzschale wird im Ausführungsbeispiel eine Klebeschicht 2 auf der Massivwand 1 beschrieben, die mit einer entsprechenden Isolierung 3 verbunden ist. An der Raumseite trägt die Isolierung 3 in an sich bekannter Weise eine Putzschicht 4.

Selbstverständlich kann die Putzschicht 4 noch aus entsprechenden Putzträgermatten, Füllstoffen und dergleichen bestehen.

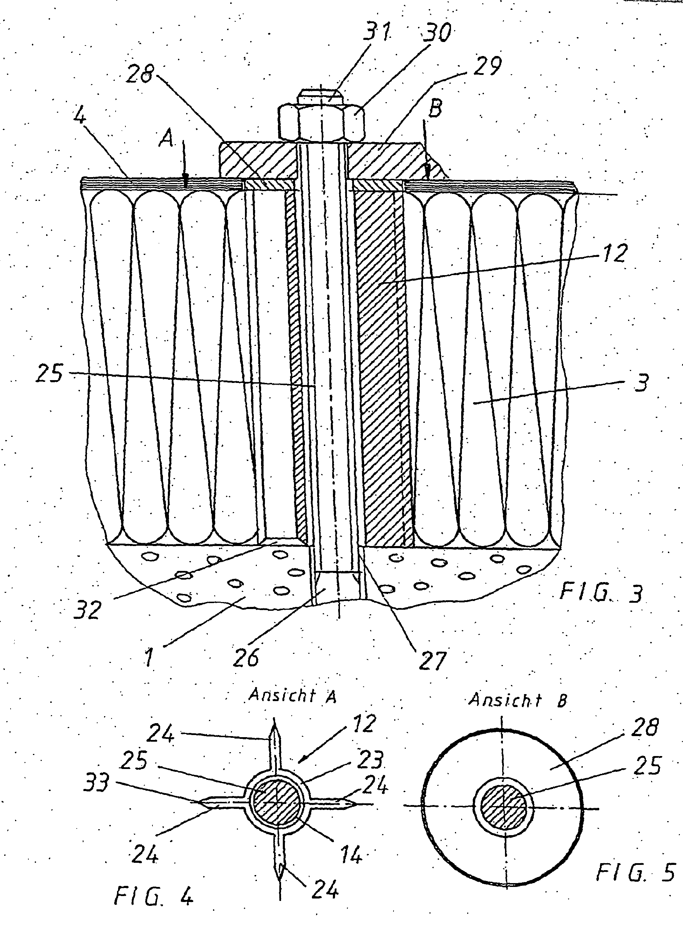

Um nun ein Bauelement 29 nach Figur 3 lastübertragend an der Massivwand 1 zu befestigen, ist der erfindungsgemäße Abstandshalter 12 vorgesehen.

Um den Abstandshalter 12 zu montieren, wird gemäß Figur 1 in einem ersten Verfahrensschritt ein Bohrer 5 verwendet, der an seiner vorderen Seite einen Bohrkopf 11 trägt, mit dem in an sich bekannter Weise eine Bohrung 9 in der Isolierung 3 und eine Bohrung 10 in der Massivwand 1 angebracht werden kann.

Erfindungsgemäß ist der Bohrer 5 drehfest mit einem Halter 6 verbunden ist, der eine Bohrkrone 8 trägt.

Mittels einer Klemmschraube 7 kann der Halter 6 frei in axialer Richtung auf dem Bohrer 5 verschoben werden und in beliebigen Höhen festgesetzt werden.
Im gezeigten Ausführungsbeispiel wurde der Halter 6 so auf dem Bohrer 5 festgesetzt, dass bei der Herstellung der Bohrungen 9, 10 in der Isolierung 3 und der Massivwand 1 die Bohrkrone 8 einen etwa kreisförmigen Ausschnitt in der Putzschicht 4 ausführt.

Dieser Ausschnitt wird dann bei Herausziehen des Bohrers 5 entfernt, und es liegt dann die darunter liegende Fläche der Isolierung 3 frei. Durch das Entfernen der Putzschicht gemäß dem Verfahrensschritt nach Figur 1 ergibt sich in diesem Bereich eine Aussparung 21, durch die der Abstandshalter ohne Verletzung der umliegenden Putzschicht montiert werden kann.

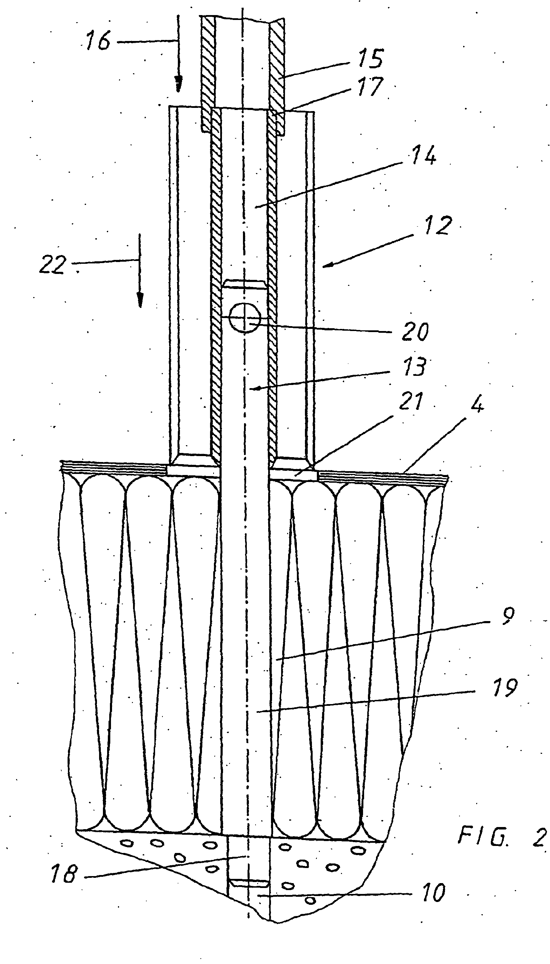

Nach diesen vorbereitenden Verfahrensschritten wird gemäß Figur 2 in die Bohrung 9 in der Isolierung 3 ein Montagedorn 13 eingesetzt, der bevorzugt einen Domschaft 19 größeren Durchmessers aufweist, als vergleichsweise der sich daran anschließende Führungskopf 18.

Der Führungskopf 18 wird in die Bohrung 10 eingeführt, so dass insgesamt der Montagedorn 13 mit seinem rückwärtigen Ende über die Putzschicht 4 heraussteht.

Dieser Montagedorn 13 dient im weiteren als Führungshilfe für einen darauf aufzusetzenden Abstandshalter 12, der eine Bohrung 14 zur Aufnahme des Montagedoms 13 aufweist.

Mit Hilfe eines abgestuften Montagewerkzeuges 15 wird nun der Abstandshalter 12 in Pfeilrichtung 22 durch die Isolierung 3 hindurch in Richtung auf die Massivwand 1 geschlagen.

Hierzu ist das Montagewerkzeug 15 mit Anschlägen 17 versehen, so dass das Montagewerkzeug am oberen Umfang des Abstandshalters 12 anliegt und mit Hammerschlägen in Pfeilrichtung 16 nach unten getrieben wird.

Nach erfolgtem Eintreiben des Abstandshalters wird der Montagedorn 13 mit Hilfe des Montagewerkzeuges 15 aus dem Abstandshalter entfernt, indem das Montagewerkzeug 15 mittels eines geeigneten Werkzeugs, welches in die Bohrung 20 eingreift, wieder aus dem Abstandshalter herausgezogen wird.

Nach dem Durchtreten des Abstandshalters 12 durch die Isolierung 3 wird die in Figur 3 dargestellte fertige Montagelage des Abstandshalters 12 erreicht.

Sobald der Abstandshalter seine endgültige Montagelage erreicht hat, wird in die freie Bohrung 14 des Abstandshalters 12 eine Ankerschraube 25 eingesetzt, die mit ihrem vorderen, freien Ende in der Bohrung 10 der Massivwand 1 in bekannter Weise verankert wird.

Im gezeigten Ausführungsbeispiel ist ein Dübelkopf 26 angeordnet, vor dem eine Spreizhülse 27 radial spreizbar gelagert ist.

Der Gewindeansatz 31 der Ankerschraube steht über das Ende des Abstandshalters 12 hervor, und auf diesen Gewindeansatz wird nun das zu befestigende Bauelement 29 aufgesetzt, wobei zum Ausgleich Dicke der Putzschicht vorher in die Aussparung 21 eine entsprechende Distanzscheibe 28 eingelegt wird. Auf diese Weise wird erreicht, dass das Bauelement 29 eben mit der Putzschicht abschließt und auf dem Abstandshalter 12 befestigt wird.

Außerdem überträgt die Distanzscheibe 28 die entsprechenden Kräfte des Bauelementes auf den Abstandshalter 12.

Es wird nun eine passende Mutter 30 auf den Gewindeansatz 31 aufgeschraubt, und damit wird das Bauelement 29 lastübertragend an dem Abstandshalter 12 angelegt, so dass damit die gesamte Last über den Abstandshalter 12 auf die Massivwand 1 übertragen wird.

Gemäß Figur 4 besteht der Abstandshalter 12 im Wesentlichen aus einem Rohr 23, an dessen Außenumfang radial nach außen gerichtete Flügelansätze 24 angeordnet sind.

Die nächst der Massivwand 1 angeordneten Stirnseiten der Flügelansätze 24 sind dann bevorzugt als Schneidekanten 32 ausgebildet, um ein Eintreiben dieser Stirnseiten in die Massivwand 1 zu ermöglichen.

Ferner wird es bevorzugt, wenn die in axialer Richtung ausgerichteten Seitenkanten 33 der Flügelansätze 24 ebenfalls als Schneidkanten ausgebildet sind, um ein Durchtreiben durch die Isolierung 3 zu erleichtern. Auf diese Weise wird die Isolierung 3 durchgeschnitten und weniger komprimiert.

Statt der hier beschriebenen Distanzscheibe 28 können - wie im allgemeinen Teil beschrieben - auch Distanzhülsen verwendet werden, mit denen größere Distanzunterschiede im Bereich der Aussparung 21 überbrückt werden können.

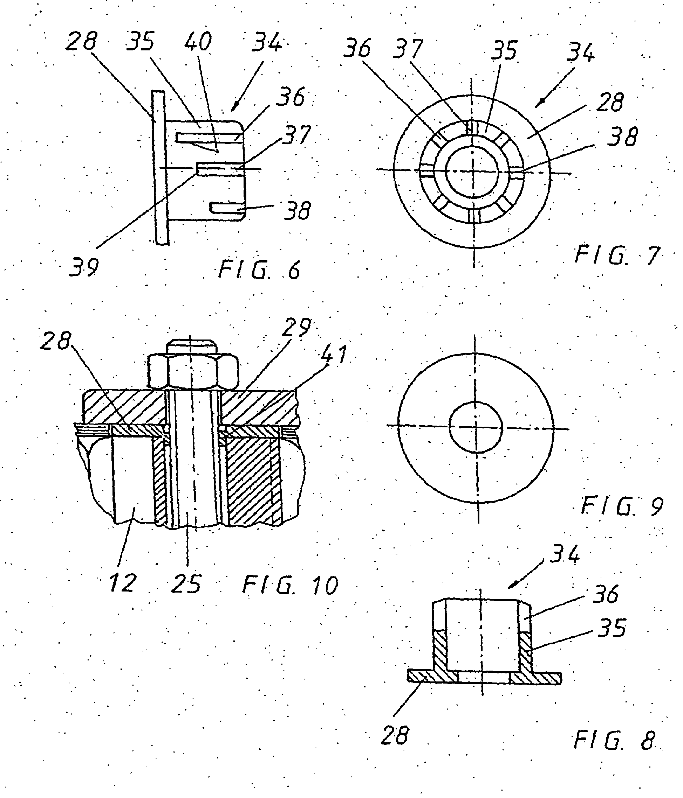

In den Figuren 6 bis 9 ist als Beispiel eine derartige Distanzhülse 34 dargestellt, die eine Distanzscheibe 28 aufweist, an der eine Hülse 35 angeformt ist.

In der Wandung dieser Hülse sind verschieden tiefe, einseitig offene Längsschlitze 36, 37, 38 angeordnet.

Somit ist es möglich, die Distanzhülse in verschiedenen Drehlagen auf die obere Stirnseite des Abstandshalters 12, und zwar auf die dortigen Flügelansätze 24, aufzusetzen, wodurch sich verschiedene Abstände der Distanzhülse 34 über der Stirnseite des Abstandshalters 12 ergeben.

Beispielsweise ist es in einer bestimmten Drehlage vorgesehen, dass die Flügelansätze lediglich am Grund 39 von mehreren, eine gleiche Länge aufweisende Längsschlitze 37 anliegen.

Ebenso kann es in einer anderen Drehlage vorgesehen werden, dass die Flügelansätze lediglich an dem Grund 40 von länger ausgebildeten Längsschlitzen 36 anliegen, so dass damit ein geringerer Abstand der Distanzscheibe 28 über der Stirnseite des Abstandshalters 12 erreicht wird.

Je nach Drehlage der Distanzhülse 34 wird die Distanzhülse mit unterschiedlich tiefen Längsschlitzen auf die zugeordneten Flügelansätze 24 des Abstandshalters 12 aufgesteckt, so dass jeweils diese Flügelansätze an dem Grund 39, 40 des jeweiligen Längsschlitzes 36 - 38 zu Anlage kommen.

Hierbei ist es vorgesehen, dass die Flügelansätze entweder nur in die Längsschlitze 36 oder nur in die Längsschlitze 37 oder nur in die Längsschlitze 38 eingreifen. Damit können zwei verschiedene Distanzhöhen der Distanzhülse 34 über dem Abstandshalter 12 erreicht werden.

In einer weiteren Ausführung nach Figur 10 ist es vorgesehen, dass auch eine Zentrierung der Ankerschraube 25 in der zentralen Mittenbohrung des Abstandshalters 12 stattfindet. Zu diesem Zweck weist die Distanzscheibe einen axialen Zentrieransatz 41 auf, der an der Zentrierscheibe angeformt ist und der in die zentrale Mittenbohrung des Abstandshalters eingreift und sich am Aussenumfang der Ankerschraube 25 anlegt.

In einer demgegenüber abgewandelten Ausführungsform kann der nur scheibenförmig ausgebildeten Distanzscheibe 28 eine Zentrierhülse zugeordnet werden, die als separates Teil auf die Distanzscheibe (oder in eine Ausnehmung der Distanzscheibe) aufgelegt wird und die sich mit ihrem axialen Ansatz sowohl durch die Mittenbohrung der Distanzscheibe 28 als auch in die Mittenbohrung des Abstandshalters 12 hinein erstreckt. Auch hier wird eine im wesentlichen formschlüssige Anlage an den Aussenumfang der Ankerschraube 25 angestrebt.

Obwohl das vorher beschriebene Ausführungsbeispiel sich nur auf eine, eine weiche Isolierung tragende Vorsatzschale bezieht, können selbstverständlich alle nicht-tragfähigen Vorsatzschalen mit dem erfindungsgemäßen Verfahren und ein nach dem Verfahren ausgebildeter Abstandshalter und eine mit dem Abstandshalter zusammenwirkende Distanzhülse bearbeitet werden.

Die Erfindung ist demnach nicht auf die Art und Zusammensetzung der Isolierschicht und einer ggf. daran angeordneten Putzschicht beschränkt.

### Zeichnungslegende

- 1: Massivwand
- 2: Klebeschicht
- 3: Isolierung
- 4: Putzschicht
- 5: Bohrer
- 6: Halter
- 7: Klemmschraube
- 8: Bohrkrone
- 9: Bohrung
- 10: Bohrung
- 11: Bohrkopf
- 12: Abstandshalter
- 13: Montagedorn
- 14: Bohrung
- 15: Montagewerkzeug
- 16: Pfeilrichtung
- 17: Anschlag
- 18: Führungskopf
- 19: Dornschaft
- 20: Bohrung
- 21: Aussparung
- 22: Pfeilrichtung
- 23: Rohr
- 24: Flügelansatz
- 25: Ankerschraube
- 26: Dübelkopf
- 27: Spreizhülse
- 28: Distanzscheibe
- 29: Bauelement
- 30: Mutter
- 31: Gewindeansatz
- 32: Schneidekante
- 33: Schneidekante
- 34: Distanzhülse
- 35: Hülse
- 36: Längsschlitz
- 37: Längsschlitz
- 38: Längsschlitz
- 39: Grund
- 40: Grund
- 41: Zentrieransatz

## Patentansprüche

1. Verfahren zur Befestigung eines Abstandshalters in einer nicht-tragfähigen Vorsatzschale vor einer Massivwand (1), wobei die Vorsatzschale eine Isolierschicht (3) und eine äußere Oberflächenschicht (4) umfasst, wobei durch eine Bohrung (9) in der Vorsatzschale hindurch ein Montagedorn (13) eingeführt wird, der mit seinem vorderen, freien Ende in die Bohrung (10) in der Massivwand (1) eingreift und mit seinem hinteren Ende aus der Vorsatzschale herausragt;
und wobei der Abstandshalter (12) auf den Montagedorn (13) aufgesetzt wird;
**dadurch gekennzeichnet,**
**dass** ein Bohrer (5) mit einer drehfest mit diesem verbundenen Bohrkrone (8) verwendet wird, um durch die Vorsatzschale hindurch eine Bohrung (10) in der Massivwand (1) anzubringen, wobei gleichzeitig die Bohrkrone (8) einen Ausschnitt in der äußeren Oberflächenschicht (4) der Vorsatzschale anbringt;
**dass** der Abstandshalter (12) mit Hilfe eines Montagewerkzeuges in die Isolierschicht (3) eingetrieben wird;
**dass** der Montagedorn (13) mit Hilfe des Montagewerkzeuges (15) aus dem Abstandshalter (12) entfernt wird, indem das Montagewerkzeug (15) mittels eines geeigneten Werkzeugs, welches in eine Bohrung des Montagedoms (20) eingreift, wieder aus dem Abstandhalter (12) herausgezogen wird;
**dass** durch eine zentrale Öffnung (14) im Abstandshalter (12) eine Ankerschraube (25) eingesetzt wird; die mit einem vorderen Befestigungskopf (26) in die Bohrung (10) in der Massivwand (1) eingreift; und
**dass** auf die aus dem Abstandshalter (12) herausragende Ankerschraube (25) ein Bauelement (29) aufgesetzt und mittels einer Mutter (30) mit einem Gewindeansatz (31) der Ankerschraube verbunden wird.

2. Verfahren nach Anspruch 1, **dadurch gekennzeichnet, dass** die Bohrkrone (8) verschiebbar und feststellbar auf dem Bohrer (5) befestigt und in ihrer Längeneinstellung auf dem Bohrer so eingestellt wird, dass sie bei fertiggestellter Bohrung (10) in der Massivwand (1) gerade die äußere Oberflächenschicht (4) entfernt.

3. Verfahren nach Anspruch 1 oder 2, **dadurch gekennzeichnet, dass** die Länge des Montagedorns (13) so gewählt wird, dass sein hinteres Ende über die Oberflächenschicht (4) heraussteht, so dass er als Führungshilfe für den auf den Montagedorn aufschiebbaren Abstandshalter (12) dient.

4. Verfahren nach einem der Ansprüche 1 bis 3, **dadurch gekennzeichnet, dass** der Abstandshalter (12) mit seiner vorderen Stirnkante in die Massivwand eingetrieben wird.

5. Verfahren nach einem der Ansprüche 1 bis 4, **dadurch gekennzeichnet, dass** vor dem Aufsetzen des Bauelements (29) eine Distanzscheibe (28) auf die Ankerschraube (25) aufgesetzt wird.

6. Verfahren nach einem der Ansprüche 1 bis 5, **dadurch gekennzeichnet, dass** vor dem Aufsetzen des Bauelements (29) eine Distanzhülse (34) auf die Ankerschraube (25) aufgesetzt wird.

7. Verfahren nach Anspruch 6, **dadurch gekennzeichnet, dass** die Wandung der Distanzhülse (34) mit verschieden tiefen, einseitig offenen Längsschlitzen (36, 37, 38) versehen wird.

8. Verfahren nach einem der Ansprüche 1 bis 7, **dadurch gekennzeichnet, dass** ein Abstandshalter (12) ein Rohr (23) aufweist, an dessen Außenumfang mehrere, verteilt angeordnete Flügelansätze (24) angeordnet sind, die sich im wesentlichen radial nach außen erstrecken.

9. Verfahren nach Anspruch 8, **dadurch gekennzeichnet, dass** das Rohr (23) des Abstandshalters (12) als zylindrisches, ovales, Dreikant- oder Mehrkantrohr ausgebildet ist.

10. Verfahren nach den Ansprüchen 8 und 9, **dadurch gekennzeichnet, dass** das Rohr (23) derart ausgebildet ist, um eine entsprechende Ankerschraube (25) oder Dübelschraube aufzunehmen.

11. Verfahren nach den Ansprüchen 8 bis 10, **dadurch gekennzeichnet, dass** die Flügelansätze (24) in einem Winkel zu einer Radiuslinie angeordnet sind.

12. Verfahren nach den Ansprüchen 8 bis 11, **dadurch gekennzeichnet, dass** die Flügelansätze (24) gerade, gekurvt, gebogen oder geknickt ausgebildet sind.

13. Verfahren nach den Ansprüchen 8 bis 12, **dadurch gekennzeichnet, dass** die der Massivwand (1) zugewandten Stirnseiten der Flügelansätze (24) mit Schneidekanten (32) versehen sind.

14. Verfahren nach den Ansprüchen 8 bis 13, **dadurch gekennzeichnet, dass** die radial nach außen gerichteten Kanten der Flügelansätze (24) mit Schneidekanten (33) versehen sind.

## Claims

1. Method for fastening a spacer in a non-load-bearing veneer wall in front of a solid wall (1), the veneer wall comprising an insulating layer (3) and an outer surface layer (4), an assembly pin (13), the leading, free end of which engages with the bore (10) in the solid wall (1) and the trailing end of which protrudes from the veneer wall, being introduced through a bore (9) in the veneer wall, and the spacer (12) being placed onto the assembly pin (13), **characterised in that** a drill (5) comprising a drill bit (8), which is rotationally engaged therewith, is used in order to form a bore (10), through the veneer wall, in the solid wall (1), the drill bit (8) simultaneously forming a cut-out in the outer surface layer (4) of the veneer wall, **in that** the spacer (12) is driven into the insulating layer (3) using an assembly tool, **in that** the assembly pin (13) is removed from the spacer (12) using the assembly tool (15) as a result of the fact that the assembly tool (15) is re-withdrawn from the spacer (12) using a suitable tool, which engages with a bore in the assembly pin (20), **in that** an anchor bolt (25), a front fastening head (26) of which engages with the bore (10) in the solid wall (1), is inserted through a central opening (14) in the spacer (12), and **in that** a structural element (29) is placed onto the anchor bolt (25), which protrudes from the spacer (12), and is connected to a threaded neck (31) of the anchor bolt by means of a nut (30).

2. Method according to claim 1, **characterised in that** the drill bit (8) is displaceably and fixably fastened to the drill (5) and is adjusted, in its longitudinal adjustment on the drill, in such a way that when the bore (10) has been completely formed in the solid wall (1), the drill bit removes specifically the outer surface layer (4).

3. Method according to either claim 1 or claim 2, **characterised in that** the length of the assembly pin (13) is selected in such a way that its trailing end protrudes beyond the surface layer (14), so the assembly pin helps to guide the spacer (12), which may be slid onto the assembly pin.

4. Method according to any one of claims 1 to 3, **characterised in that** the leading edge of the spacer (12) is driven into the solid wall.

5. Method according to any one of claims 1 to 4, **characterised in that**, prior to the positioning of the structural element (29), a distance plate (28) is placed onto the anchor bolt (25).

6. Method according to any one of claims 1 to 5, **characterised in that**, prior to the positioning of the structural element (29), a distance sleeve (34) is placed onto the anchor bolt (25).

7. Method according to claim 6, **characterised in that** the wall of the distance sleeve (34) is provided with longitudinal slots (36, 37, 38) of different depths, which are open on one side.

8. Method according to any one of claims 1 to 7, **characterised in that** a spacer (12) comprises a pipe (23), on the outer circumference of which are disposed a plurality of wing attachments (24), which are arranged in a distributed manner and extend substantially radially outwards.

9. Method according to claim 8, **characterised in that** the pipe (23) of the spacer (12) is configured as a cylindrical, oval, triangular or polygonal pipe.

10. Method according to claims 8 and 9, **characterised in that** the pipe (23) is configured to receive a corresponding anchor bolt (25) or dowel pin.

11. Method according to claims 8 to 10, **characterised in that** the wing attachments (24) are arranged at an angle to a radius line.

12. Method according to claims 8 to 11, **characterised in that** the wing attachments (24) are straight, curved, bent or buckled.

13. Method according to claims 8 to 12, **characterised in that** the end faces, facing the solid wall (1), of the wing attachments (24) are provided with cutting edges (32).

14. Method according to claims 8 to 13, **characterised in that** the radially outwardly oriented edges of the wing attachments (24) are provided with cutting edges (33).

## Revendications

1. Procédé pour fixer une pièce d'espacement dans un mur-rideau non porteur devant une paroi massive (1), étant précisé que le mur-rideau comprend une couche isolante (3) et une couche superficielle extérieure (4), qu'on introduit dans un perçage (9) du mur-rideau un mandrin de montage (13) qui pénètre avec son extrémité avant libre dans le perçage (10) du mur-rideau (1) et dépasse avec son extrémité arrière du mur-rideau, et qu'on pose la pièce d'espacement (12) sur le mandrin de montage (13),
**caractérisé en ce qu'**on utilise un foret (5) avec une couronne de foret (8) reliée, solidaire en rotation, à celui-ci, pour réaliser un perçage (10) dans la paroi massive (1), à travers le mur-rideau, la couronne de foret (8) réalisant en même temps une découpe dans la surface superficielle extérieure (4) du mur-rideau ;
**en ce qu'**on enfonce la pièce d'écartement (12) dans la couche isolante (3) à l'aide d'un outil de montage ;
**en ce qu'**on enlève le mandrin de montage (13) de la pièce d'écartement (12) à l'aide de l'outil de montage (15), en retirant celui-ci de la pièce d'écartement (12) à l'aide d'un outil approprié qui pénètre dans un perçage (20) du mandrin de montage (13) ;
**en ce qu'**on installe à travers une ouverture centrale (14) prévue dans la pièce d'écartement (12) une vis d'ancrage (25) qui pénètre avec une tête d'actionnement avant (26) dans le perçage (10) de la paroi massive (1) ;
et **en ce qu'**on pose un élément de construction (29) sur la vis d'ancrage (25) qui dépasse de la pièce d'écartement (12) et on relie ledit élément de construction (29) à un épaulement fileté, à l'aide d'un écrou (30).

2. Procédé selon la revendication 1, **caractérisé en ce que** la couronne de foret (8) est fixée sur le foret (5) de manière à pouvoir être déplacée et bloquée et est réglée en longueur sur le foret de manière à enlever juste la couche superficielle extérieure (4), quand le perçage (10) est terminé dans la paroi massive (1).

3. Procédé selon la revendication 1 ou 2, **caractérisé en ce qu'**on choisit la longueur du mandrin de montage (13) pour que son extrémité arrière dépasse de la couche superficielle (4), de sorte qu'il sert d'aide au guidage pour la pièce d'écartement (12) apte à être enfilée sur le mandrin de montage.

4. Procédé selon l'une des revendications 1 à 3, **caractérisé en ce qu'**on enfonce la pièce d'écartement (12) avec son bord frontal avant dans la paroi massive.

5. Procédé selon l'une des revendications 1 à 4, **caractérisé en ce qu'**avant de poser l'élément de construction (29), on pose une rondelle d'écartement (28) sur la vis d'ancrage (25).

6. Procédé selon l'une des revendications 1 à 5, **caractérisé en ce qu'**avant de poser l'élément de construction (29), on pose une douille d'écartement (34) sur la vis d'ancrage (25).

7. Procédé selon la revendication 6, **caractérisé en ce qu'**on prévoit sur la paroi de la douille d'écartement (34) des fentes oblongues (36, 37, 38) d'épaisseurs différentes et ouvertes d'un côté.

8. Procédé selon l'une des revendications 1 à 7, **caractérisé en ce qu'**une pièce d'écartement (12) comporte un tube (23) sur la circonférence extérieure duquel sont réparties plusieurs saillies en forme d'ailettes (24) qui s'étendent essentiellement radialement vers l'extérieur.

9. Procédé selon la revendication 8, **caractérisé en ce que** le tube (23) de la pièce d'écartement (12) est conçu comme un tube cylindrique, ovale, triangulaire ou polygonal.

10. Procédé selon les revendications 8 et 9, **caractérisé en ce que** le tube (23) est conçu pour recevoir une vis d'ancrage (25) ou un goujon fileté correspondant.

11. Procédé selon les revendications 8 à 10, **caractérisé en ce que** les saillies formant ailettes (24) sont disposées suivant un certain angle par rapport à un axe radial.

12. Procédé selon les revendications 8 à 11, **caractérisé en ce que** les saillies formant ailettes (24) ont une forme droite, courbe, arquée ou coudée.

13. Procédé selon les revendications 8 à 12, **caractérisé en ce que** les côtés frontaux des saillies formant ailettes (24) qui sont tournés vers la paroi massive (1) sont pourvus d'arêtes coupantes (32).

14. Procédé selon les revendications 8 à 13, **caractérisé en ce que** les bords des saillies formant ailettes (24) qui sont dirigés radialement vers l'extérieur sont pourvus d'arêtes coupantes (33).
